(19) Europäisches Patentamt
European Patent Office
Office européen des brevets

(11) **EP 1 717 713 A2**

(12) **EUROPEAN PATENT APPLICATION**

(43) Date of publication:
**02.11.2006 Bulletin 2006/44**

(51) Int Cl.:
***G06F 17/21*** (2006.01)  ***G06F 17/24*** (2006.01)
***G06F 17/28*** (2006.01)

(21) Application number: **06113213.0**

(22) Date of filing: **27.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.04.2005 US 117555**

(71) Applicant: **Xerox Corporation**
**Rochester,**
**New York 14644 (US)**

(72) Inventors:
• **Campbell, Robert G.**
**Maryville, NY 37803 (US)**

• **Purvis, Lisa S.**
**Fairport, NY 14450 (US)**
• **Harrington, Steven J.**
**Webster, NY 14580 (US)**
• **Karlsson, Jonas**
**Rochester, NY 14618 (US)**
• **Regruit, Christopher J.**
**Rochester, NY 14607 (US)**

(74) Representative: **Grünecker, Kinkeldey,**
**Stockmair & Schwanhäusser**
**Anwaltssozietät**
**Maximilianstrasse 58**
**80538 München (DE)**

(54) **Automated document localization and layout method**

(57) A method which includes segmenting the content of a document into one or more original document structures, determining which of the one or more original document structures are to be localized, replacing the original document structures to be localized with new content, and automatically adjusting the layout of the document with new content to generate a more aesthetically pleasing document.

FIG. 1

**Description**

The embodiments disclosed herein are directed to localizing documents and more specifically, to methods for preserving document aesthetics after a document is localized.

As used herein, localizing a document refers to altering the contents of a document for a particular recipient or class of recipients. For example, text can be translated into a local language or the language of the recipient. In other cases, particular text or pictures may be replaced to include material more appropriate for a particular audience. For example, a road safety guide may use an image of a road or highway local to the intended recipients.

However, when elements of a document are altered (including replaced, removed, or added) the layout of the original work may be distorted or no longer aesthetically pleasing. The ability to preserve an appropriate or at least aesthetically pleasing layout after localization is a value-add for content management applications and services.

Currently, automated document translation systems exist that can translate either text or a webpage that a user supplies into another language. The resulting "document" is simply either a text listing of the translated text or the web page with translated text. However, there is no notion of taking a completed document in any form (e.g. Word, PowerPoint, Quark, etc.) and localizing it, substituting appropriate text and images for the particular language and locale, and adjusting its layout to provide an equivalently well-designed document in another language or for a different locale.

The embodiments disclosed herein use techniques developed for localization, such as translation, and techniques for automated document layout to provide an end-to-end document localization service. As such, it enables complete documents to be automatically transformed into appropriate forms for different locales, while preserving their initial design.

The embodiments disclosed herein include a method for localizing a document that includes localizing the content of the document, and automatically adjusting the format of the document after the document has been localized according to one or more quantified document constraints.
In one embodiment of the method of claim 7, automatically adjusting the layout of the document involves using a constraint optimization method, where the constraints include one or more quantized document parameters.
In a further embodiment replacing the structures is to be localized with new content is accomplished as part of the constraint optimization method, where the content to be replaced and the new content are also constraints
In a further embodiment automatically adjusting the layout occurs after replacing the structures with new content.
In a further embodiment the new content includes translated portions of the original document structures the document includes translating text of the document.

Embodiments also include a method, which includes segmenting the content of the document into structures, determining a set of structures to be localized, replacing the structures to be localized with new content; and automatically adjusting the layout of the document with new content to generate a more aesthetically pleasing document.
In one embodiment of the method of claim 8, the method further comprises segmenting the document into high-level document structures prior to translating the document.
In a further embodiment the method further comprises translating only those structures that need translating.
In a further embodiment the method further comprises determining a set of the high-level document structures to be translated.
In a further embodiment the optimum values for at least some of the constraints are based upon the document parameters of the original document.
In a further embodiment the optimum values for at least some of the constraints are based upon the recipient's aesthetic preferences.
In one embodiment of the method of claim 10, the method further comprises determining a set of the high-level document structures to be localized,
wherein localizing the content of the document is limited to localizing the content only of the set of structures to be localized.
In a further embodiment localizing the content of the document includes translating the text of the document.

Various exemplary embodiments will be described in detail, with reference to the following figures, wherein:

Figure 1 is an image of an exemplary page having text and images.

Figure 2 is an illustration of the exemplary page of Figure 1 after translation of the text.

Figure 3 is another illustration of the exemplary page of Figure 1 after translation of the text, wherein the picture and images overlap.

Figure 4 is an illustration of the elements of the translated page of Figure 2 adjusted to be more pleasing to the eye.

Figure 5 is an illustration of the elements of the translated page of Figure 3 adjusted to be more pleasing to the eye.

Figure 6 is a flowchart detailing an exemplary method for localizing documents.

Figure 7 illustrates a document template which specifies that there are two areas that should be filled with content: areaA and areaB, and which also specifies that the positions and sizes of areaA and areaB can be changed.

This invention provides a method to automatically develop a localized version of a complete document that is aesthetically pleasing to the recipient. The localized document may include text, pictures, and layout information. The text, images and other data may be present in any of a variety of formats.

Localizing a document may include, for example, translating text, using local terms or expressions, and replacing images with imagery more relevant to the recipient. While translation is a relatively common method of localizing a document, in many circumstances, one may wish to do more to localize a document than simply translate the document into another language. The complete localization of a document may involve not only translating the text, but also using local terms or expressions. Using local terms or expressions can encompass, for example, replacing a currency used in the document with a local currency by replacing currency units with appropriate local currency units (dollars → Euros) and changing the amount to reflect the current exchange rate. One may also wish to select appropriate localized content, whether that is text or images. For instance, a page in a textbook on geography that is for the Florida school system might include an image and/or text about the Everglades, while the same textbook for the California school system would include an image and/or text about the redwood forests.

One way to localize content elements automatically is to query an existing content database using keywords associated with the element, and retrieve the localized content from the database. For example, variable information documents contain "variable slots" that include a query, which can be instanced once the recipient is known. This same querying method can be used for localizing documents. For example, an original document containing an image of a forest is to be localized for a Florida recipient. The query may be ('forest" & 'image" & 'Florida"). The query would retrieve from the database an image of a Florida forest for the localized document.

Also, where a caption for an image is localized, the image corresponding to the caption could be localized by retrieving a new image corresponding to the localized caption. If the variable information type query process is used, the terms in the caption could be use in a query to automatically retrieve an image corresponding to those terms from a local or networked database. In embodiments, replacement images could be kept locally or remotely through a network and tagged in some manner so that they can be automatically inserted into a localized document. This would most likely be used in the case where area specific content changes were made (such as localized textbooks or safety guides), but could also be used where the caption is simply translated for a new locale. The translated words could be associated with a particular image.

Localizing a document will often involve translating some or all of the document. The text of each paragraph and caption can be translated if the recipient's language differs from that of the original document. In people-based translation service environments, often the translators will work on the translation, changing words and sentences, until the translated text fits into the same layout as the original text. This requires time as well as deep translation expertise, and is therefore not amenable to automated workflows. A variety of automated systems also exist to translate text today such as, for example, Babelfish. Text could be automatically sent to the translation software, which could send back the translated text to the local device after translation and reinsert the text into the document in place of the original text. Current state of the art for automated translation is to read in a series of text lines, and return the text lines in a different language. Standard translation software simply translates the text without any regard to the difference in length between the original text and the translated text.

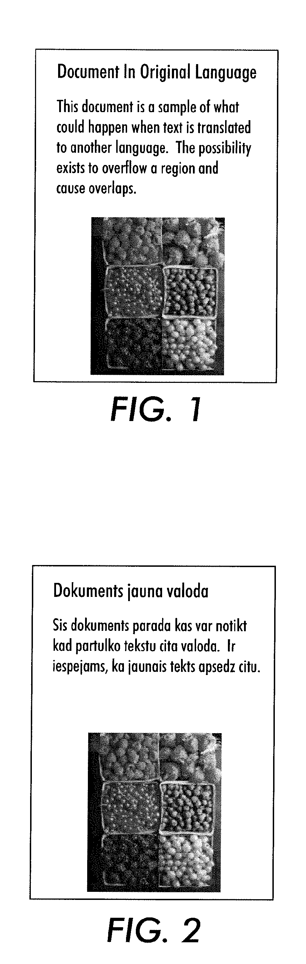

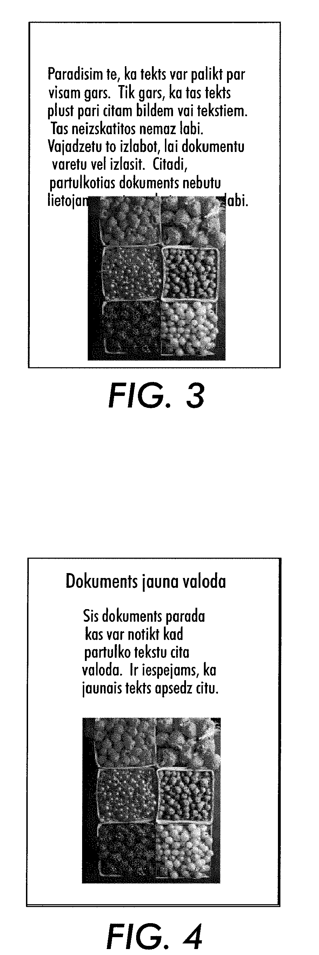

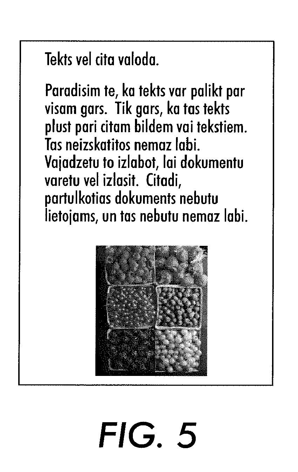

However, these translation and image substitution techniques can worsen the appearance of a document. Localizing a document may cause a number of problems that include, for example, margins being left off, text and images overlapping, etc. If a totally automated workflow is attempted, by just substituting original text with translated text, or original images with localized images, the resulting document may no longer be aesthetically pleasing, as shown by the translation from the page in Figure 1 to that in Figure 2. Localizing a document may cause even more drastic problems such as overlaps. Figure 3 illustrates a case where translated text overlaps the image that is there. While the translated documents in Figures 2 and 3 are functional, they would look more pleasing if they were adjusted to look more like the documents shown in Figures 4 and 5 respectively. These examples show what happens when the text is translated (localized) and how the document layout needs to be adjusted afterwards. The same situations arise when a localized image is swapped in for an original image.

Automated document layout techniques can be applied to localized documents to produce a complete document that is localized and delivered in a completely laid-out and well-designed form. For example, this invention could update the overlapped documents of Figures 2 and 4 into ones such as those shown in Figures 3 and 5, which is a much more feasible and aesthetically pleasing result, not requiring any human intervention.

Using established techniques, qualities such as segment size, margins, and symmetry can be treated as constraints to be optimized. These and other qualities can be quantized and measured and optimized in a constraint-based process. The qualities are solved for simultaneously.

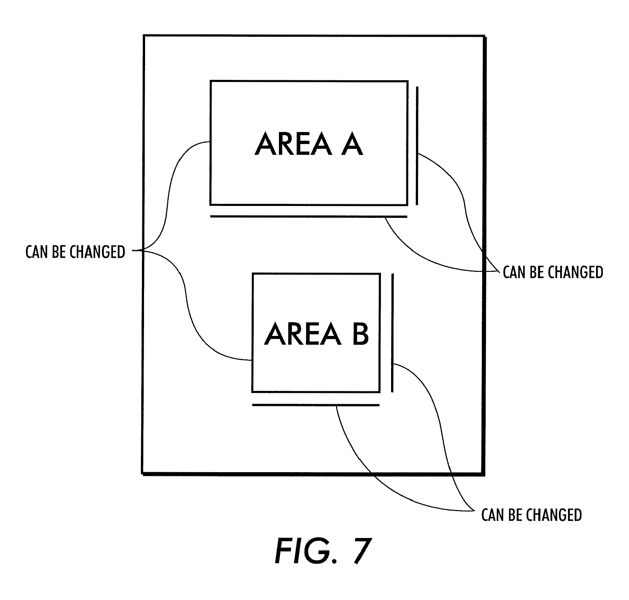

The constraint optimization formulation specifies that each problem variable has a value domain consisting of the possible values to assign to that variable. For variables that are document areas to be filled with content (e.g., areaA and areaB of Fig. 7), the value domains are the content pieces that are applicable to each area. For variables that are document parameters, the value domains are discretized ranges for those parameters, so that each potential value for the parameter appears in the value domain (e.g., 1... M, where M is some maximum value). For variables whose value domains are content pieces, the default domain is set up to be all possible content pieces in the associated content database, which is specified in the document template.

The required constraints specify relationships between variables and/or values that must hold in order for the resulting document to be valid. The desired constraints specify relationships between variables and/or values that we would like to satisfy, but aren't required to satisfy in order for the resulting document to be valid. Constraints may be unary (apply to one value/variable), binary (apply to two values/variables), or n-ary (apply to n values/variables), and in our invention are entered by the user as part of the document template. An example of a required unary constraint in the document domain is: areaA must contain an image of a forest. An example of a required binary constraint could be that the height of areaA has be less than or equal to the height of areaB. If we had another variable (areaC), an example of a required 3-ary constraint would be that the sum of the widths of areaA and areaB should be greater than the width of areaC. In a variable data situation, the constraints could also include customer attributes (e.g., areaA must contain an image that is appropriate for customer1).

Desired constraints are represented as objective functions to maximize or minimize. For example, a desired binary constraint that the area of areaA be maximized might be represented by the objective function: f = areaA-width * areaA-height, which would then be maximized. If more than one objective function is defined for the problem, the problem becomes a multi-criteria optimization problem. If it is a multi-criteria optimization problem, we sum the individual objective function scores to produce the overall optimization score for a particular solution. We can furthermore weight each of the desired constraints with a priority, so that the overall optimization score then becomes a weighted sum of the individual objective function scores. Any one of a number of known existing constraint optimization algorithms could then be applied to create the final output document.

Further, over 100 possible value properties have been identified that are commonly used in document design. These value properties can be measured, and a value function can be calculated to produce a measure of the property. It is these measurable value properties that allow the quantification of document intents. There is a functional relationship between intents and value properties that can be approximated as linear. There is thus a matrix A of weights that give the contribution of each value property to each intent coordinate, illustrated by:

$$\mathbf{I} = A\mathbf{V} \qquad\qquad (1)$$

This relationship can be used to define the intents for both their inference and their application. To infer the intents associated with a document or document component, initially, the value functions associated with the document or component can be calculated. The vector of values $\mathbf{V}$ can then be multiplied by the matrix of weights A to obtain the quantified intents vector $\mathbf{I}$.

It is possible that after segments of the document have been replaced that application of a constraint optimization program would lead to an appearance different from the original due to factors such as, for example, quantity of content in the replaced segments and image dimensions. In many cases, it may be desirable to have the localized document appear as much like the original document as possible, including the layout. In those cases, the value properties of the original document may be used to determine the optimization constraints for the layout of the localized version of the document to help preserve the appearance of the document.

In embodiments, the resulting effects of localizing a document on its value properties may be determined by comparing intent vectors of the documents. Using a proper weight matrix, the value properties of the localized document can be converted to an intent vector and compared to the intent vector of the original document. A constraint optimization method may be used to minimize the difference between the intent vectors of the original and localized documents.

In cases where the presentation of the localized version of the document remains the same and the original document was formatted using a particular set of aesthetic optimization targets prior to localization, the process could use those same optimum values again after or during localization.

Also, while the constraints may be quantized, the optimum values are not necessarily objective. Different creators or recipients of the translated documents may value certain features more than others, or they may have different preferences with regard to the optimum value of a parameter. Therefore, the optimized version of a document may vary based upon what either the creator or the recipient prefers for the optimum values for the document parameters. In some cases, these may be substantially different than the document parameters of the original document..

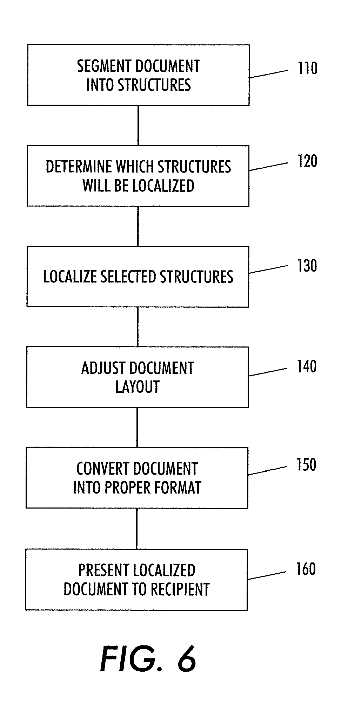

Figure 6 outlines steps for localizing and reformatting text. First, the document may be segmented 110 into high-level structures or portions. These structures may include, for example, text in paragraphs, images, and captions to images. For some documents (such as a single picture, for example), the segment or portion may be the entire document.

Next, determine 120 which structures or portions of the document will be localized. Not all the segments of a document may need to be localized. For example, a document on water and land use in the Southwest may be translated from English to Spanish (or vice-versa) but still retain the same landscape images. Some documents will consist of only one segment.

The content of each of the segmented structures may then be localized 130 according to any of a variety of techniques automated or not.

The layout of the localized document may be fixed automatically to improve the aesthetic appearance of the localized document 140. This step may occur after or during the localization step or steps 130 and 140 may be done as one step. The localization process could be incorporated into the constraint optimization process. The new content used to replace segments of the original document would be unary constraints in the optimization process. The retrieval of local content would be one more element or elements of a multiple constraint satisfaction problem.

If the result of the layout process is in a format other than the one desired, the document may also be converted into the desired output format (e.g. postscript, Quark file, etc.) 150. The final localized and formatted document may then be presented to the recipient 160.

In this way, this invention provides an automated document localization and layout service.

**Claims**

1. A method comprising:

   segmenting the content of an original document into one or more original document structures;
   selecting a set of the one or more original document structures to be replaced;
   replacing the set of structures with new structures; and
   automatically adjusting the layout of the document with new structures to generate a more aesthetically pleasing document.

2. The method of claim 1 wherein automatically adjusting the layout of the document involves using a constraint optimization method, where the constraints include one or more quantized document parameters.

3. The method of claim 2, wherein the optimum values for at least some of the constraints are based upon the document parameters of the original document.

4. The method of claim 2, wherein the optimum values for at least some of the constraints are based upon the recipient's aesthetic preferences.

5. The method of claim 2 wherein replacing the set of structures is to be localized with new content is accomplished as part of the constraint optimization method, where the content to be replaced and the new content are also constraints

6. The method of claim 1, further comprising converting the format of the document with new structures into a different desired output format.

7. A method comprising:

   segmenting the content of a document into one or more original document structures;
   determining which of the one or more original document structures are to be localized;
   replacing the original document structures to be localized with new content; and
   automatically adjusting the layout of the document with new content to generate a more aesthetically pleasing document.

8. A method for translating a document, comprising:

   translating at least some of the text of the document;
   automatically adjusting the layout of the revised document according to optimum desired values of one or more quantified document constraints.

9. A method for localizing a document, comprising:

   localizing the content of the document;
   automatically adjusting the format of the document after the document has been localized according to one or more quantified document constraints.

10. The method of claim 18, further comprising segmenting the document into high-level document structures prior to localizing the document.

**Document In Original Language**

This document is a sample of what could happen when text is translated to another language. The possibility exists to overflow a region and cause overlaps.

**FIG. 1**

**Dokuments jauna valoda**

Sis dokuments parada kas var notikt kad partulko tekstu cita valoda. Ir iespejams, ka jaunais tekts apsedz citu.

**FIG. 2**

Paradisim te, ka tekts var palikt par
visam gars. Tik gars, ka tas tekts
plust pari citam bildem vai tekstiem.
Tas neizskatitos nemaz labi.
Vajadzetu to izlabot, lai dokumentu
varetu vel izlasit. Citadi,
partulkotias dokuments nebutu
lietoja̱[_____]labi.

## FIG. 3

## Dokuments jauna valoda

Sis dokuments parada
kas var notikt kad
partulko tekstu cita
valoda. Ir iespejams, ka
jaunais tekts apsedz citu.

## FIG. 4

Tekts vel cita valoda.

Paradisim te, ka tekts var palikt par visam gars. Tik gars, ka tas tekts plust pari citam bildem vai tekstiem. Tas neizskatitos nemaz labi. Vajadzetu to izlabot, lai dokumentu varetu vel izlasit. Citadi, partulkotias dokuments nebutu lietojams, un tas nebutu nemaz labi.

## FIG. 5

FIG. 6

CAN BE CHANGED

AREA A

AREA B

CAN BE CHANGED

CAN BE CHANGED

## FIG. 7